(19) **Europäisches Patentamt European Patent Office Office européen des brevets**

(11) **EP 4 515 199 B1**

(12) **FASCICULE DE BREVET EUROPEEN**

(45) Date de publication et mention de la délivrance du brevet:
**11.02.2026 Bulletin 2026/07**

(21) Numéro de dépôt: **23722565.1**

(22) Date de dépôt: **27.04.2023**

(51) Classification Internationale des Brevets (IPC):
**G01M 5/00** *(2006.01)* **G01M 11/08** *(2006.01)*
**G01N 21/84** *(2006.01)* **G02B 6/42** *(2006.01)*
**G01N 21/88** *(2006.01)*

(52) Classification Coopérative des Brevets (CPC):
**G01M 11/083; G01M 5/0091; G01N 21/84; G01N 21/8806; G02B 6/4298;** G01N 2021/8472; G02B 6/04; G02B 6/4286

(86) Numéro de dépôt international:
**PCT/EP2023/061123**

(87) Numéro de publication internationale:
**WO 2023/209097 (02.11.2023 Gazette 2023/44)**

(54) **DISPOSITIF DE DETECTION D'UN DEFAUT DANS UN ELEMENT STRUCTUREL EN MATERIAU COMPOSITE**

VORRICHTUNG ZUR ERKENNUNG EINES DEFEKTS BEI EINEM STRUKTURELEMENT AUS EINEM VERBUNDSTOFF

DEVICE FOR DETECTING A DEFECT IN A STRUCTURAL ELEMENT MADE OF COMPOSITE MATERIAL

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **28.04.2022 FR 2204034**

(43) Date de publication de la demande:
**05.03.2025 Bulletin 2025/10**

(73) Titulaire: **Epsilon Composite**
**33340 Gaillan-en-Médoc (FR)**

(72) Inventeurs:
- **RICHARD, Léo**
  **33320 Le Taillan-Medoc (FR)**
- **QUETEL, Lionel**
  **22560 Pleumeur Bodou (FR)**
- **RIBOULET, Jean-François**
  **22560 Trebeurden (FR)**
- **LYPHOUT, Florent**
  **22300 Caouennec-Lanvezeac (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
EP-A2- 2 693 187     GB-A- 2 145 517
US-A- 4 936 649      US-A1- 2015 346 427
US-B1- 6 486 465     US-B1- 6 513 962

- HOFER ET AL: "Fibre optic damage detection in composite structures", COMPOSITES, IPC BUSINESS PRESS LTD. HAYWARDS HEATH, GB, vol. 18, no. 4, 1 September 1987 (1987-09-01), pages 309 - 316, XP024042866, ISSN: 0010-4361, [retrieved on 19870901], DOI: 10.1016/0010-4361(87)90294-1

**Description**

La présente invention a pour objet un dispositif de détection d'un défaut dans un élément structurel en matériau composite. L'invention permet en particulier de détecter une rupture ou une amorce de rupture de l'élément structurel.

Il est connu d'utiliser des éléments structurels en matériau composite dans les câbles haute tension aérien. On peut notamment employer comme élément structurel un jonc en matériau composite, typiquement avec un cœur en fibre de carbone recouvert d'une couche de verre. On toronne sur le jonc une ou plusieurs couches d'aluminium, notamment trapézoïdal, qui sert d'élément conducteur pour le câble.

Le choix du matériau composite permet d'alléger le câble. On peut ainsi utiliser davantage d'aluminium, ce qui limite les pertes par effet Joule. On peut en outre faire passer plus de courant.

Il est important de pouvoir vérifier l'intégrité structurelle du câble, et notamment de l'élément structurel du câble.

Il est connu, par exemple du document WO 2019/168998 A1, un système pour l'interrogation d'éléments structurel en matériau composite renforcés de fibres optiques qui permet d'évaluer leur intégrité structurelle. Le système et le procédé utilisent la transmission de la lumière issue d'un dispositif d'émission de lumière, à travers des fibres optiques de détection qui sont intégrées sur la longueur des éléments structurel. L'incapacité à détecter la lumière transmise à travers une ou plusieurs des fibres optiques est une indication que l'intégrité de l'élément structurel est altérée.

Les documents US6486465 B1, US4936649 A et EP2693187 A2 décrivent d'autres dispositifs de détections d'un défaut dans un matériau composites à l'aide de fibres optiques.

La présente invention propose un dispositif amélioré de détection d'un défaut dans un élément structurel en matériau composite, le dispositif permettant de visualiser aisément et successivement la lumière transmise par une pluralité de fibres optiques de détection sans avoir à faire tourner le dispositif d'émission de lumière, tout en transmettant un maximum de puissance lumineuse, et ce avec un minimum de perte.

L'invention a ainsi pour objet un dispositif de détection d'un défaut dans un élément structurel en matériau composite.

Le dispositif selon l'invention comprend :

- un élément structurel en matériau composite, de forme allongée,
- au moins une fibre optique de détection disposée à l'intérieur de l'élément structurel, et s'étendant d'une première extrémité longitudinale de l'élément structurel à une deuxième extrémité longitudinale de l'élément structurel, et
- un dispositif d'émission de lumière connecté fonctionnellement à la première extrémité longitudinale de l'élément structurel, de manière à transmettre la lumière émise par le dispositif d'émission de lumière à une première extrémité longitudinale de ladite au moins une fibre optique de détection, le dispositif d'émission de lumière comprenant une pluralité de sources lumineuses, chaque source lumineuse étant connectée fonctionnellement à un toron de fibres optiques, de manière à transmettre la lumière émise par la source lumineuse aux fibres optiques du toron, l'ensemble des torons étant regroupés en un faisceau de torons, notamment à l'intérieur d'une gaine disposée à une extrémité des torons, l'extrémité des torons du faisceau étant connectée fonctionnellement avec la première extrémité longitudinale de l'élément structurel.

Ainsi, l'utilisation du faisceau de torons disposé à l'intérieur d'une gaine d'alignement permet une bonne transmission de la lumière vers l'élément structurel, avec un maximum de puissance transmise (on concentre beaucoup de lumière sur une petite section) et un minimum de perte. Les torons de fibres ont pour avantage qu'au moins une fibre sera bien alignée avec une fibre optique de détection.

Le dispositif peut comprendre en outre un dispositif de détection de lumière, apte à détecter la lumière issue de chaque fibre optique de détection au niveau d'une deuxième extrémité longitudinale de chaque fibre optique de détection.

Le dispositif d'émission de lumière peut en outre être apte à actionner séquentiellement les différentes sources lumineuses, de manière à transmettre successivement la lumière émise par les différentes sources lumineuses aux différents torons et aux différentes fibres optiques de détection.

Avec cette solution, une source lumineuse peut être allumée de manière isolée ou plusieurs sources lumineuses peuvent être allumées simultanément pour projeter de la lumière sur un segment particulier du jonc.

Cette particularité d'actionnement séquentiel, combinée à l'emploi d'un faisceau de torons à l'interface entre les sources lumineuses et le jonc, permet d'optimiser et de maintenir un alignement {source lumineuse - fibres optiques}, garantissant une fiabilité accrue dans l'appréciation de l'intégrité du jonc. Ainsi, l'actionnement successif des différentes sources lumineuses permet d'éclairer successivement chacune des fibres optiques de détection sans faire intervenir un déplacement du dispositif d'émission de lumière, comme par exemple le faire tourner.

Alternativement, le dispositif de détection de lumière peut être apte à tourner, par exemple par rotation, de manière à détecter successivement la lumière issue des différentes fibres optiques de détection.

L'extrémité des torons du faisceau est avantageusement disposée à l'intérieur d'une gaine et peut être alignée avec la première extrémité longitudinale de l'élément structurel.

Le matériau composite peut comprendre un cœur en fibres de carbone entouré par une couche de verre.

Le dispositif peut comprendre une pluralité de fibres optiques de détection. On peut par exemple utiliser quatre fibres optiques de détection, chaque fibre couvrant en section transversale de l'élément structurel un quart de cercle.

Les fibres optiques de détection peuvent comprendre au moins une fibre optique monomode et/ou au moins une fibre optique multimode. Les fibres optiques de détection sont de préférence des fibres monomodes, moins onéreuses et plus petites, ce qui limite le risque de rupture.

La première extrémité longitudinale et la deuxième extrémité longitudinale de l'élément structurel sont avantageusement polies.

La pluralité de sources lumineuses peut comprendre des diodes électroluminescentes.

Les diodes électroluminescentes peuvent avoir une longueur d'onde d'émission comprise entre 1400 et 1600 nm ou entre 380 et 780 nm (domaine du visible).

Le nombre de torons est de préférence au moins égal au nombre de fibres optiques de détection.

Le dispositif de détection de lumière peut comprendre une photodiode.

Un exemple de procédé de mise en œuvre du dispositif peut être le suivant :

- on coupe l'élément structurel, par exemple à l'aide d'une scie à métaux,
- on polit la première extrémité longitudinale et la deuxième extrémité longitudinale de l'élément structurel,
- on présente le faisceau de torons face au jonc, à l'intérieur de la gaine,
- on allume successivement les différentes sources lumineuses (par exemple de manière circulaire ou de manière aléatoire), de manière ce que les différents secteurs du faisceau de torons viennent illuminer successivement les différentes fibres optiques de détection.

D'autres avantages et particularités de la présente invention résulteront de la description qui va suivre, donnée à titre d'exemple non limitatif et faite en référence aux figures annexées :

[Fig. 1] est un diagramme illustrant schématiquement un dispositif de détection d'un défaut dans un élément structurel en matériau composite selon l'invention,

[Fig. 2] est une vue de détail du diagramme de la figure 1,

[Fig. 3] est une vue de détail de la figure 2,

[Fig. 4] est une vue de dessus d'une carte de pilotage de diodes,

[Fig. 5] est une figure mathématique utile à la compréhension de l'invention,

[Fig. 6] illustre une première configuration de diodes pouvant être utilisées dans le dispositif selon l'invention,

[Fig. 7] illustre une deuxième configuration de diodes pouvant être utilisées dans le dispositif selon l'invention,

[Fig. 8] est une figure mathématique utile à la compréhension de l'invention,

[Fig. 9] est une figure mathématique utile à la compréhension de l'invention,

[Fig. 10] est un diagramme illustrant le taux de perte en fonction de la distance entre la diode et le jonc,

[Fig. 11] est un diagramme illustrant la puissance obtenue en sortie de fibre en fonction de la distance entre la diode et le jonc,

[Fig. 12] est une vue illustrant la concentration de faisceaux issus de diodes,

[Fig. 13] est une vue illustrant la focalisation d'un faisceau divergent,

[Fig. 14] est une vue en section transversale d'un jonc, conformément à un premier mode de réalisation,

[Fig. 15] est une vue en section transversale d'un jonc, conformément à un deuxième mode de réalisation,

[Fig. 16] est une vue en perspective d'une polisseuse,

[Fig. 17] est une vue en perspective d'un support de jonc destiné à être reçu par la polisseuse de la figure 16,

[Fig. 18] est une vue partielle en perspective d'un dispositif alternatif de détection de défaut,

[Fig. 19] est une vue partielle d'un dispositif selon l'invention,

[Fig. 20] est une vue en perspective ensemble de torons de fibres optiques,

[Fig. 21] est une vue de détail de l'ensemble de la figure 20,

[Fig. 22] est une vue en perspective d'un dispositif de détection du dispositif selon l'invention, conformément à un premier mode de réalisation,

[Fig. 23] est une vue en perspective d'un dispositif de détection du dispositif selon l'invention, conformément à un deuxième mode de réalisation,

[Fig. 24] est un diagramme montrant le niveau de détection de la lumière en fonction de l'angle de balayage des sources lumineuses actionnées, conformément à un premier mode de réalisation,

[Fig. 25] est un diagramme montrant le niveau de détection de la lumière en fonction de l'angle de balayage des sources lumineuses actionnées, conformément à un deuxième mode de réalisation,

[Fig. 26] est un diagramme montrant le niveau de détection de la lumière en fonction de l'angle de balayage des sources lumineuses actionnées, conformément à un troisième mode de réalisation,

[Fig. 27] est un diagramme montrant le niveau de détection de la lumière en fonction de l'angle de balayage des sources lumineuses actionnées, conformément à un quatrième mode de réalisation,

[Fig. 28] est un diagramme montrant le niveau de détection de la lumière en fonction de l'angle de balayage des sources lumineuses actionnées, conformément à un cinquième mode de réalisation,

[Fig. 29] est un diagramme montrant le niveau de détection de la lumière en fonction de l'angle de balayage des sources lumineuses actionnées, conformément à un sixième mode de réalisation,

[Fig. 30] est un diagramme montrant le niveau de détection de la lumière en fonction de l'angle de balayage des sources lumineuses actionnées, conformément à un septième mode de réalisation,

[Fig. 31] est un diagramme montrant le niveau de détection de la lumière en fonction de l'angle de balayage des sources lumineuses actionnées, conformément à un huitième mode de réalisation,

[Fig. 32] est un diagramme montrant le niveau de détection de la lumière en fonction de l'angle de balayage des sources lumineuses actionnées, conformément à un neuvième mode de réalisation,

[Fig. 33] est un diagramme montrant la puissance de sortie en fonction de la consigne d'injection,

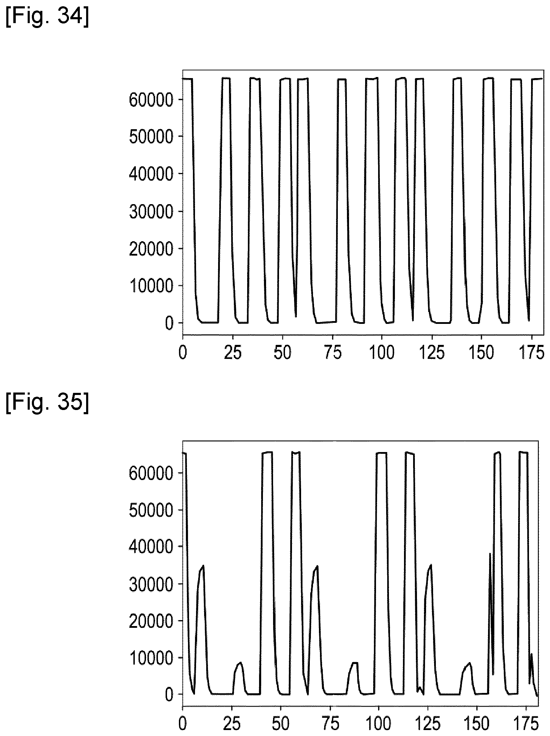

[Fig. 34] est un diagramme montrant le niveau de détection de la lumière en fonction de l'angle de balayage des sources lumineuses actionnées, conformément à un dixième mode de réalisation,

[Fig. 35] est un diagramme montrant le niveau de détection de la lumière en fonction de l'angle de balayage des sources lumineuses actionnées, conformément à un onzième mode de réalisation,

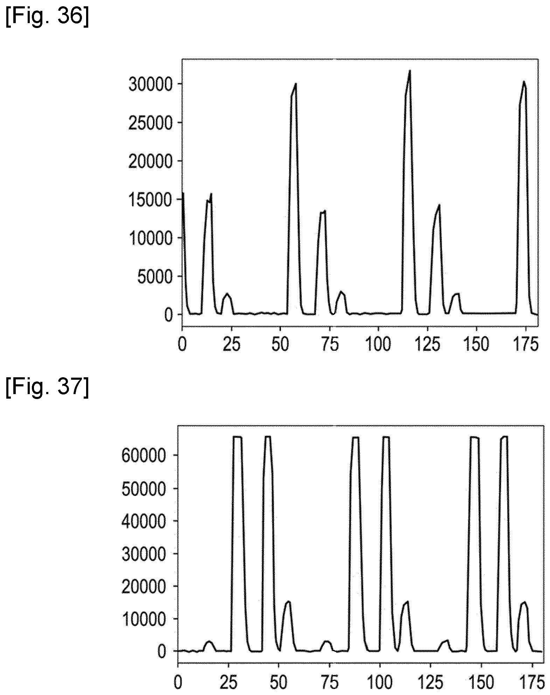

[Fig. 36] est un diagramme montrant le niveau de détection de la lumière en fonction de l'angle de balayage des sources lumineuses actionnées, conformément à un douzième mode de réalisation,

[Fig. 37] est un diagramme montrant le niveau de détection de la lumière en fonction de l'angle de balayage des sources lumineuses actionnées, conformément à un treizième mode de réalisation,

[Fig. 38] est un diagramme montrant le niveau de détection de la lumière en fonction de l'angle de balayage des sources lumineuses actionnées, conformément à un quatorzième mode de réalisation,

[Fig. 39] est une première vue partielle d'un dispositif de détection selon l'invention,

Fig. 40] est une deuxième vue partielle d'un dispositif de détection selon l'invention,

Fig. 41] est une troisième vue partielle d'un dispositif de détection selon l'invention, et

[Fig. 42] est un diagramme représentant un spectre d'absorption de fibres optiques.

## DESCRIPTION DETAILLEE

### Principe de fonctionnement du dispositif de détection selon l'invention

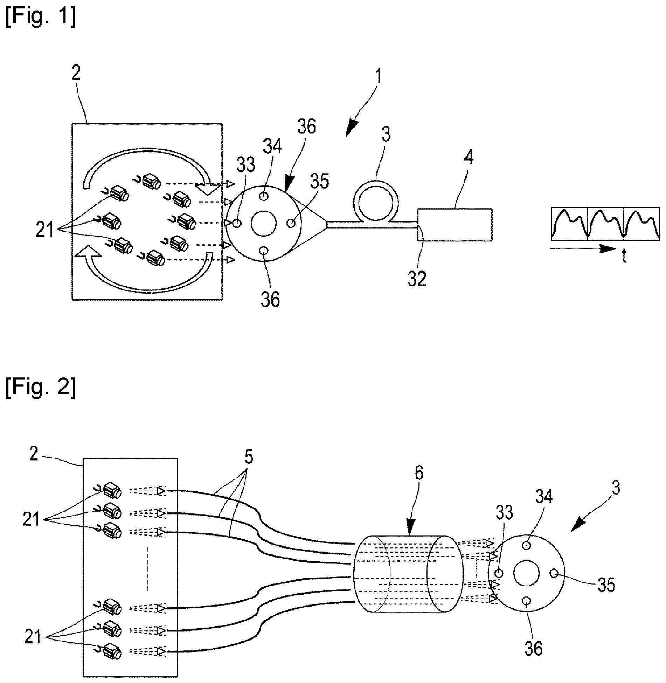

Tel qu'illustré aux figures 1 et 2, un dispositif 1 de détection d'un défaut dans un élément structurel en matériau composite selon l'invention comprend un dispositif d'émission de lumière 2 apte à émette de la lumière en direction d'un élément structurel 3 en matériau composite, qui se présente sous la forme d'un jonc. La lumière ayant traversé le jonc 3 est détectée par un dispositif de détection de lumière 4. En sortie du détecteur 4 on affiche la lumière transmise par le jonc 3.

L'émetteur de lumière 2 est en mesure d'émettre une puissance optique dont une partie va s'injecter dans des fibres optiques 33, 34, 35, 36 du jonc 3. Les fibres optiques 33, 34, 35, 36 sont des fibres optiques de détection qui sont disposées à l'intérieur du jonc 3, et qui s'étendent d'une première extrémité longitudinale 31 du jonc 3 à une deuxième extrémité longitudinale 32 du jonc 3.

L'émetteur de lumière 2 comprend une pluralité d'émetteurs 21. Les émetteurs 21 sont avantageusement des diodes électroluminescentes (LEDs) infrarouges ou dans le domaine visible, qui sont allumées selon une séquence rotative et permettent ainsi d'éclairer successivement chacune des fibres 33, 34, 35, 36 du jonc 3. La rotation permet d'obtenir au niveau du détecteur 4 une forme d'onde ayant autant de maxima locaux que de fibres passantes (non détériorées).

L'effet rotatif doit permettre de s'affranchir du niveau de puissance absolue mesurée en sortie de jonc 3 pour conclure sur l'état des fibres 33, 34, 35, 36, et ainsi utiliser un critère relatif par rapport aux maxima locaux. La puissance absolue mesurée en sortie de jonc 3 doit être suffisante pour obtenir une extinction quantifiable par le détecteur 4.

La multiplicité des diodes 21 permet également de minimiser l'impact de la position angulaire relative entre le jonc 3 et l'émetteur de lumière 2, car l'orientation du jonc 3 devant les diodes 21 est exclue.

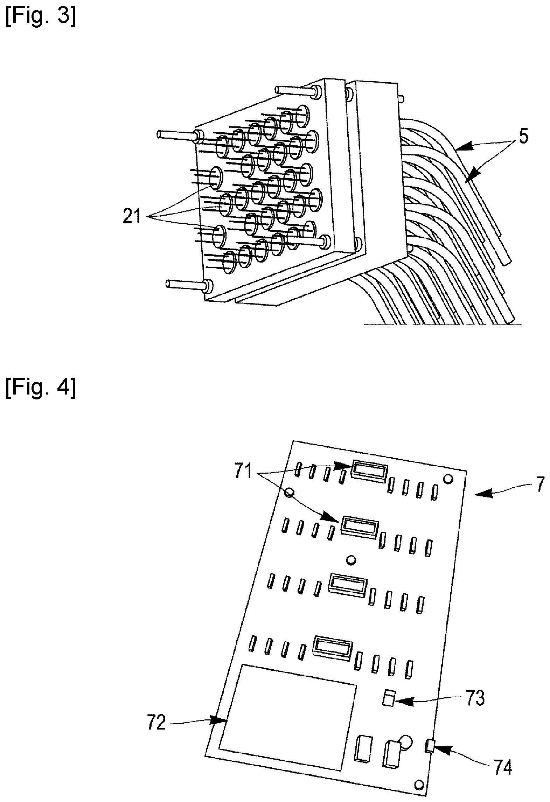

Tel qu'illustré aux figures 2 et 3, chaque diode 21 est placée en face d'un toron 5 de fibres, et l'ensemble des fibres des différents torons 5 sont réparties à l'intérieur d'un faisceau de torons 6, ce qui permet de capter d'autant plus de puissance lumineuse provenant de chaque diode 21.

Le faisceau 6 permet de multiplier le nombre de diodes 21 sans pour autant réduire l'intensité lumineuse. Le faisceau permet d'éloigner les diodes 21 de l'extrémité du jonc 3, ce qui permet d'augmenter fortement le nombre de diodes (une diode par toron 5 du faisceau 6) et des choisir des diodes plus encombrantes mais ayant un faisceau plus directif (intensité lumineuse plus importante). La meilleure directivité des diodes 21 va ainsi permettre de faciliter l'injection de la lumière dans les fibres du faisceau 6.

De plus, les diodes 21 n'ont plus besoin d'être mécaniquement placées selon la géométrie du jonc 3, car cette contrainte est déportée sur le placement des fibres dans le corps du faisceau 6.

Comme mentionné précédemment, les fibres optiques 33, 34, 35, 36 noyées dans le jonc 3 tolèrent un angle d'injection de lumière maximum $\theta_A$. En pratique, projeter de la lumière en vis-à-vis de l'extrémité du jonc 3, sans raccordement physique comme par soudage, demande une précision accrue d'alignement avec les fibres optiques 33, 34, 35, 36. Un désalignement de quelques degrés suffit pour que la lumière ne puisse pas s'introduire de manière effective dans une des fibres optiques 33, 34, 35, 36 du jonc 3. Comme il est compris, un désalignement peut compromettre dès le départ l'appréciation de la santé matière du jonc composite 3, une non-détection de lumière en sortie pouvant dès lors correspondre à un faux positif d'altération structurelle.

La multiplication des diodes 21 et des torons 5 correspondants du faisceau 6 selon l'invention permet ainsi de maximiser les chances que la lumière émise par les différentes diodes 21 respecte cette condition d'alignement. Autrement dit, le signal lumineux a statistiquement plus de chance d'être adéquatement véhiculé le long des fibres optiques 33, 34, 35, 36 du jonc 3 pour en évaluer l'intégrité.

Aussi, à noter que l'actionnement séquentiel des diodes 21 tel que préconisé renforce la qualité d'appréciation des défauts. En effet, l'effet rotatif obtenu moyennant l'allumage séquentiel des diodes 21 selon l'invention n'est pas soumis à des problèmes de stabilité d'axe ou à des comportements vibratoires pouvant être observés dans le cas d'une source lumineuse entraînée mécaniquement en rotation en vis-à-vis du jonc. De tels phénomènes sont générateurs de déviation et donc de pollution des résultats.

Cette rotation dite « digitale » selon l'invention, qui se distingue d'une rotation dite « physique », permet donc de tendre vers un alignement des plus précis et de le conserver tout le long du processus d'appréciation de la santé matière. Le dispositif selon l'invention ne reposant pas sur un mouvement mécanique, il s'ensuit une répétabilité accrue des résultats et, par voie de conséquence, une plus grande fiabilité. Par ailleurs, il est à noter que l'invention n'est pas limitée à générer un effet rotatif par un actionnement en cascade des diodes 21. En pratique, les diodes 21 peuvent être actionnées séquentiellement suivant tout type de motifs, voire de manière aléatoire. Une diode peut être allumée de manière isolée ou encore plusieurs diodes 21 peuvent être allumées simultanément pour projeter de la lumière sur un segment particulier du jonc 3.

Cette particularité d'actionnement séquentiel présente un intérêt certain lorsqu'une détérioration de fibre optique 33, 34, 35, 36 semble être prima facie détectée. En effet, il est rendu possible de multiplier les passes pour former une redondance en actionnant les mêmes diodes 21, et/ou les diodes adjacentes sous la forme d'un nuage de points autour du défaut potentiel, plusieurs fois d'affilée pour s'assurer que la première détection est bien représentative de la réalité. Une telle souplesse d'exécution ne serait pas possible en cas déplacement mécanique d'une source lumineuse suivant un cheminement prédéfini, par exemple en cercle.

Pour évaluer les performances du faisceau 6, un prototype a été conçu sous la forme d'une carte 7 de pilotage des diodes 21 ainsi qu'une platine mécanique permettant d'aligner les diodes 21 avec les fibres du faisceau 6. La carte 7 comprend une connectique 71 de raccordement aux diodes, une embase 72 pour microcontrôleur, un système de contrôle 73 du courant dans les diodes, et des alimentations 74.

Essai comparatif : évaluation des pertes d'injection et de l'atténuation linéique avec un seul émetteur

Pour une fibre du jonc, le niveau de puissance en sortie *Pout* va dépendre de la puissance injectée *Pinj* et de l'atténuation linéique dans la fibre *AttLin :*

$$Pout = Pinj - Att_{Lin}[dB]$$

Et la puissance injectée est fonction de la puissance de l'émetteur $P_{Tx}$, du taux de puissance sur le cœur de la fibre $\tau_i$, et du taux de réflexion lié à la qualité du polissage $\tau_{pol}$.

La puissance de l'émetteur $P_{Tx}$ se déduit de l'intensité angulaire $I_L$ [$mW.sr^{-1}$] (par unité d'angle solide), de la surface sphérique réceptrice S et de la distance d entre l'émetteur et l'extrémité de la fibre.

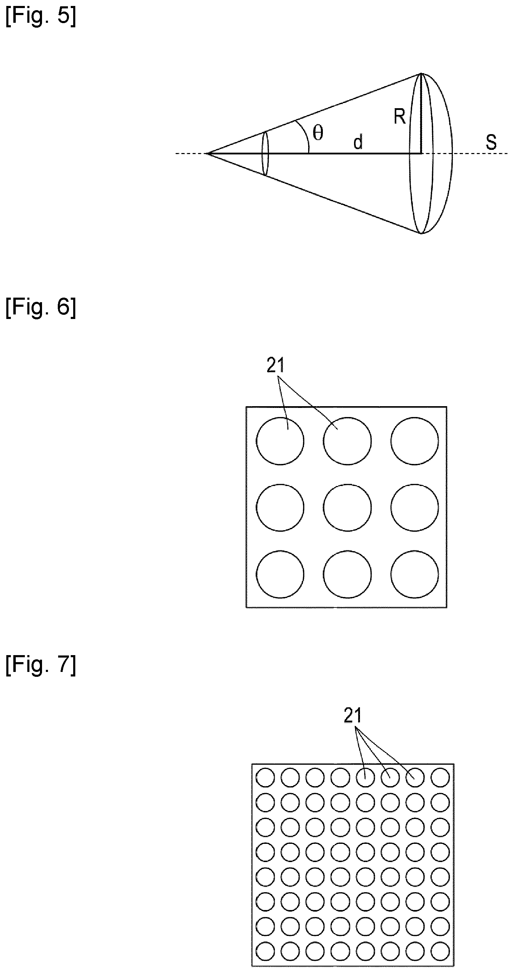

Pour de faibles angles solides, la surface sphérique peut être approximée par la surface plane de rayon R issue du demi-angle de diffusion $\theta$ (figure 5) :

Une première possibilité (figure 6) est l'utilisation de diodes 21 de forte puissance (> 1000 $mW.sr^{-1}$), une deuxième possibilité (figure 7) étant l'utilisation de diodes 21 de faibles puissance (5-10 $mW.sr^{-1}$).

On peut utiliser comme diodes de forte puissance des diodes d'intensité angulaire égale à 1500 $mW.sr^{-1}$, de demi-angle $I_L$ = 50 % $I_{Lnom}$ égal à 10°, de dimensions L*L*H en mm de 3.5*3.5*2.39, et d'intensité angulaire par $mm^2$ égale à 122.

On peut utiliser comme diodes de forte puissance des diodes d'intensité angulaire égale à 5 $mW.sr^{-1}$, de demi-angle $I_L$ = 50 % $I_{Lnom}$ égal à 70°, de dimensions L*L*H en mm de 1*0.5*0.5, et d'intensité angulaire par $mm^2$ égale à 10.

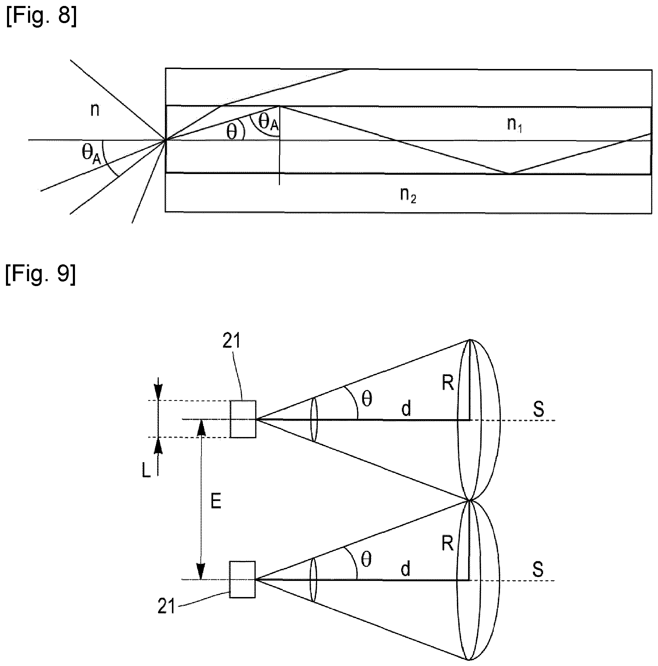

Par ailleurs (figure 8), la fibre tolère un angle d'injection maximum $\theta_A$ caractérisé par son ouverture numérique *NA*

On peut utiliser une fibre monomode de diamètre de cœur égal à 9 $\mu$m, d'ouverture numérique égale à 0.12 et d'angle d'injection maximum $\theta_A$ de 6.9°.

On peut également utiliser une fibre multimode de diamètre de cœur égal à 50 $\mu$m, d'ouverture numérique égale à 0.22 et d'angle d'injection maximum $\theta_A$ de 12.7°.

Toute la puissance ayant un angle d'incidence supérieur à $\theta_A$ ne pourra pas être injectée dans la fibre (quelle que soit la distance entre la diode et la fibre), ce qui permet de calculer $P_{Tx}$ en fonction de la diode et de la fibre utilisée. Ainsi, pour une diode de forte puissance et pour une fibre monomode, $P_{Tx}$ = 132.5 $mW$. Pour une diode de forte puissance et pour une fibre multimode, $P_{Tx}$ = 455.6 $mW$. Pour une diode de faible puissance et pour une fibre monomode, $P_{Tx}$ = 0.23 $mW$. Pour une diode de faible puissance et pour une fibre multimode, $P_{Tx}$ = 0.79 $mW$.

Parmi la puissance dont l'incidence est inférieure à $\theta_A(P_{Tx}(\theta_A))$, seule une partie pourra effectivement être injectée dans la fibre du fait de la distance entre la diode et la fibre. Ce taux de perte $\tau_i$ peut être matérialisé par le rapport entre la surface du cœur de fibre $S_C$ et la surface éclairée par la diode $S_E$. La puissance incidente sur le cœur de fibre $P_i(d)$ peut servir de comparaison entre les différentes fibres :

En considérant la distance d raisonnablement la plus proche du jonc (d = 1 $mm$), la puissance injectée en fonction du type de diode et du type de fibre est la suivante:

- pour une diode de forte puissance et pour une fibre monomode $P_i$(d = 1mm) = 0.74 $mW$,
- pour une diode de forte puissance et pour une fibre multimode $P_i$(d = 1mm) = 22.78 $mW$,
- pour une diode de faible puissance et pour une fibre monomode $P_i$(d = 1mm) = 1.27 $mW$,
- pour une diode de faible puissance et pour une fibre multimode $P_i$(d = 1mm) = 38.9 $mW$.

Toute la puissance $P_i$(d) ne va finalement pas être injectée du fait des imperfections de la surface du cœur, malgré le polissage. Il est difficile de prévoir de manière précise ces pertes, mais un majorant vraisemblable peut être considéré : $\tau_{pol}$ = 3 $dB$.

La puissance réellement injectée dans le cœur de fibre va être atténuée de manière progressive au travers des fibres, selon l'atténuation linéique à la longueur d'onde de travail. Les diodes trouvées fonctionnent entre 800 et 950 nm, ce qui correspond à environ 3.5 dB/km, soit $Att_{Lin}$ = 7 $dB$ pour la longueur maximum de jonc de 2 km.

Essai comparatif : évaluation des pertes d'injection et de l'atténuation linéique avec des émetteurs multiples

Comme expliqué ci-dessus, l'objectif est de tendre vers une continuité de la puissance émise à la surface du jonc grâce à une matrice de diodes. Cet objectif de continuité implique également de faire en sorte que les faisceaux de chaque diode se juxtaposent deux à deux (voire se chevauchent), ce qui conditionne la distance diode/fibre d et l'entraxe entre les diodes.

En considérant la juxtaposition exclusive deux à deux, la situation peut être modélisée tel qu'illustré à la figure 9.

Pour un entrave entre diodes donné, la distance minimale pour obtenir le recouvrement des faisceaux $d_{min}$ vaut :

$$d_{min} = E_{min}/(2 * \tan(\theta_A))$$

L'entrave minimum correspond à la situation où les diodes sont juxtaposées, soit $E_{min}$ = $L$ :

- pour une diode de forte puissance, et pour $L$ = 3.5 $mm$, pour une fibre monomode, $d_{min}$ = 14.5 $mm$,
- pour une diode de forte puissance, et pour $L$ = 3.5 $mm$, pour une fibre multimode, $d_{min}$ = 7.8 $mm$,
- pour une diode de faible puissance, et pour $L$ = 0.5 $mm$, pour une fibre monomode , $d_{min}$ = 2.1 $mm$,
- pour une diode de faible puissance, et pour $L$ = 0.5 *mm,* pour une fibre multimode, $d_{min}$ = 1.1 *mm.*

Ainsi, la taille des diodes de forte puissance implique de les éloigner considérablement pour obtenir la continuité des faisceaux, ce qui dégrade par un facteur au carré l'intensité ($\Omega = S/d^2$).

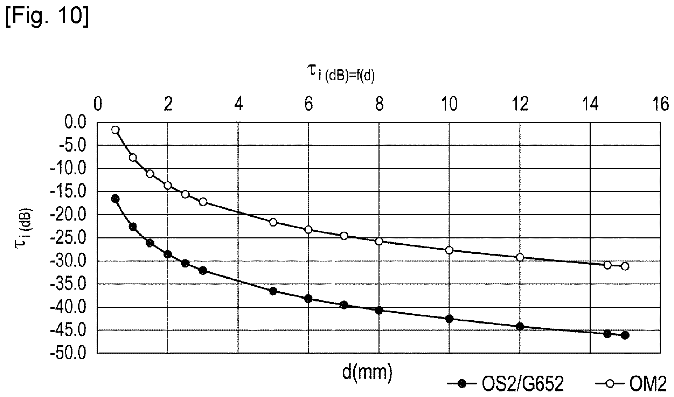

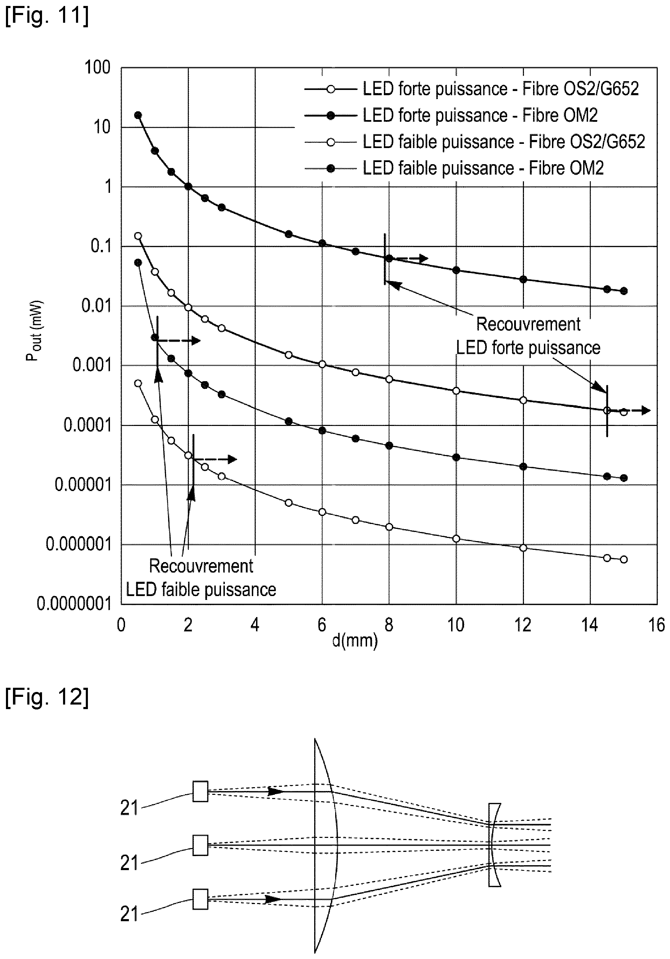

Pour visualiser l'impact de la distance diode/-fibre (d), les figures 10 et 11 donnent respectivement le taux de puissance émise sur le cœur de fibre $\tau_i$ et le niveau de puissance $P_{out}$ en sortie de fibre en fonction de *d*.

Essai comparatif : augmentation de la puissance lumineuse injectée

Du fait de leur taille, les diodes de forte puissance nécessitent de les éloigner considérablement pour obtenir du recouvrement entre les faisceaux adjacents, ce qui fait chuter la densité de puissance à la surface du jonc.

Pour compenser cette perte de densité, il pourrait être envisagé d'utiliser une lentille convergente pour permettre de positionner des diodes sur un diamètre plus important que celui du jonc. Mais la lentille convergente va augmenter l'angle d'incidence des faisceaux en périphérie de lentille ce qui empêchera le faisceau de rester dans l'ouverture numérique de la fibre. Il serait donc possible d'ajouter une lentille divergente pour rétablir l'angle des faisceaux (figure 12).

A l'inverse, la solution à base de diodes de faible puissance n'est pas sujet à une perte de densité de puissance (les diodes étant plus proches du jonc). Mais l'inconvénient de ces diodes réside dans l'angle de diffusion bien supérieur à l'ouverture numérique de la fibre.

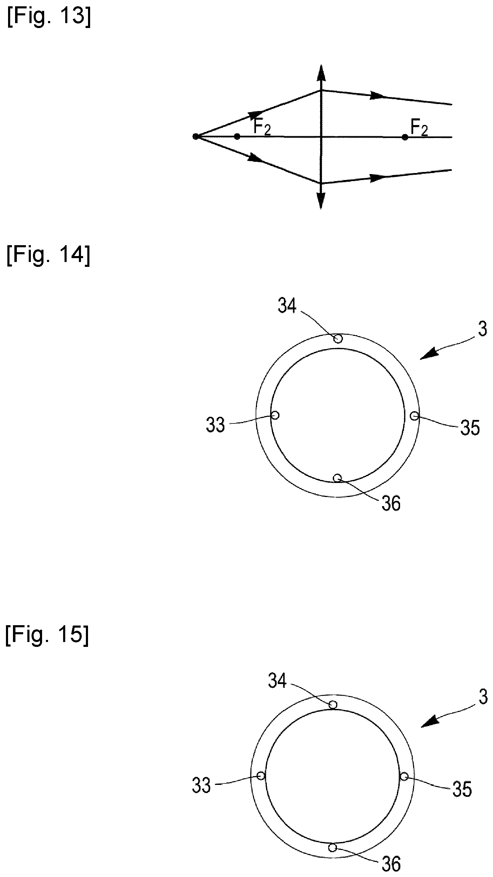

Dans ce cas une seule lentille convergente permettrait de réduire l'angle de diffusion des faisceaux pour s'approcher de l'ouverture numérique de la fibre (figure 13).

Essai comparatif : caractérisation du touret

Dans un premier mode de réalisation, on fournit un câble de 250 m de longueur et de 8 mm de diamètre instrumenté avec 4 fibres optiques. Ce câble a été caractérisé par réflectométrie.

**[0067]** - sur une première fibre multimode, la longueur d'onde est de 1550 nm, l'atténuation linéique mesurée est de 30 dB/km, l'inhomogénéité d'atténuation est supérieure à 10 dB, la longueur de fibre détectée est de 160 m, et le pointeur rouge est détecté en sortie des 250 m,

- sur une seconde fibre multimode , la longueur d'onde est de 1550 nm, l'atténuation linéique mesurée est de 15 dB/km, l'inhomogénéité d'atténuation est supérieure à 10 dB, la longueur de fibre détectée est de 250 m, et le pointeur rouge n'est pas détecté en sortie des 250 m.

Ces premières mesures révèlent une forte inhomogénéité dans l'atténuation linéique, traduisant des contraintes inhomogènes, ainsi qu'une atténuation moyenne de l'ordre de 20-30 dB/km traduisant des contraintes ou micro-courbures élevées.

Ces fortes atténuations à 1550 nm vont nécessiter une très forte dynamique de mesure.

Dans un deuxième mode de réalisation, on réalise un câble en modifiant le procédé d'insertion des fibres de détection. Les fibres sont plus tendues lors de la fabrication pour permettre d'homogénéiser les contraintes appliquées entre les même fibres d'un jonc. Ce câble de 120 m a été caractérisé par réflectométrie.

Les quatre fibres de détection sont non cassées et accessibles librement aux deux extrémités. Les mesures réalisées avec le réflectomètre sont les suivantes :

- pour la fibre multimode numéro 1, la longueur d'onde est de 1550 nm, l'atténuation linéique mesurée est supérieure à 50 dB/km, l'inhomogénéité d'atténuation est supérieure à 20 dB, la longueur de fibre détectée est de 130 m, et le pointeur rouge est détecté en sortie des 130 m,

- pour la fibre multimode numéro 2, la longueur d'onde est de 1550 nm, l'atténuation linéique mesurée est supérieure à 50 dB/km, l'inhomogénéité d'atténuation est supérieure à 20 dB, la longueur de fibre détectée est de 130 m, et le pointeur rouge est détecté en sortie des 130 m,

- pour la fibre monomode numéro 1, la longueur d'onde est de 1550 nm, l'atténuation linéique mesurée est de 14 dB/km, l'inhomogénéité d'atténuation est d'environ 3-4 dB, la longueur de fibre détectée est de 130 m, et le pointeur rouge est détecté en sortie des 130 m,

- pour la fibre monomode numéro 2, la longueur d'onde est de 1550 nm, l'atténuation linéique mesurée est de 3 dB/km, l'inhomogénéité d'atténuation est d'environ 2 dB, la longueur de fibre détectée est de 130 m, et le pointeur rouge est détecté en sortie des 130 m.

Ces mesures donnent de bien meilleurs résultats que dans le premier mode de réalisation, en particulier pour les fibres monomodes.

La fibre monomode numéro 2 montre peu de pertes sur ces 120 m (moins de 0.5 dB), identiques aux pertes de la bobine amorce utilisée. L'insertion de cette fibre dans le jonc n'a donc pas créé de pertes.

On observe davantage de pertes sur la fibre monomode numéro 1 (environ 2 dB) et une plus grande inhomogénéité dans l'atténuation linéique (3-4 dB). Ceci est le résultat de contraintes inhomogènes ou de micro-courbures sur cette fibre.

Les deux fibres multimodes présentent une atténuation linéique et une inhomogénéité dans cette atténuation très élevées traduisant des contraintes ou micro-courbures élevées.

Ces résultats sont ainsi très satisfaisants et encouragent l'utilisation de fibres monomodes plutôt que multimodes.

Polissage du jonc après découpe

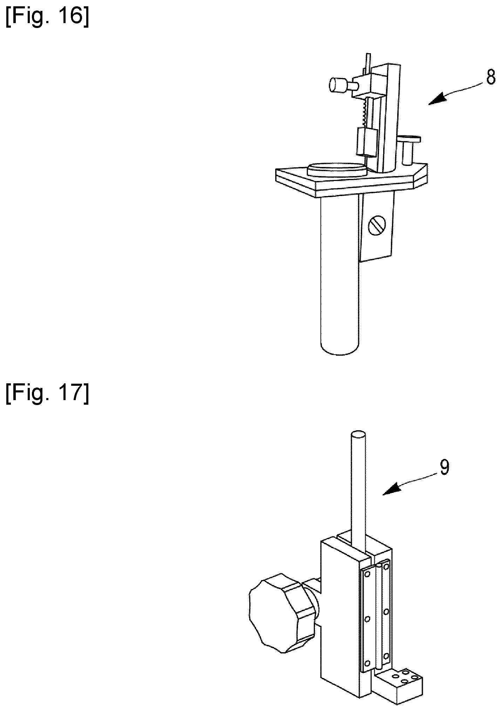

On utilise une polisseuse 8 (figure 16).

Cette polisseuse permettra de préparer les extrémités de jonc pour pouvoir injecter et collecter la lumière.

Le modèle utilisé est une polisseuse. Elle possède un plateau de polissage assez large (5 cm de diamètre) pour permettre le polissage de joncs de 10 mm de diamètre et permet de s'adapter aisément au polissage des joncs. On peut réaliser un support de jonc 9 permettant le maintien du jonc lors du polissage (figure 17).

Afin de valider les performances de la polisseuse, un jonc de longueur 5 m a été poli sans traitement préalable. Le grain utilisé est P180, correspondant à un grain de très grosse taille.

Résultats d'expérimentation : essai comparatif avec des jarretières

Un premier test a été réalisé avec des diodes de faible puissance pour évaluer la puissance injectée dans des jarretières SM-monomode 11 (et dans des jarretières MM-multimode 10. Les deux jarretières mesurent environ 50 cm, ce qui rend l'atténuation linéique négligeable.

Pour la jarretière SM-monomode, et avec une fibre monomode, la puissance mesurée est comprise entre 1 nW et 100mW. Pour la jarretière MM-multimode, et avec une fibre OM2 multimode, la puissance mesurée est comprise entre 100 et 100 mW.

Les valeurs mesurées sont largement en dessous des valeurs théoriques, d'un facteur environ 100. Ces écarts sont vraisemblablement dus au fait que l'alignement manuel de la fibre devant la diode n'est pas vraiment précis, d'autant que les diodes n'ont pas pu être soudées de manière complètement plane par rapport au circuit imprimé, du fait de leur taille réduite.

Résultats d'expérimentation : essai avec un dispositif de détection selon l'invention

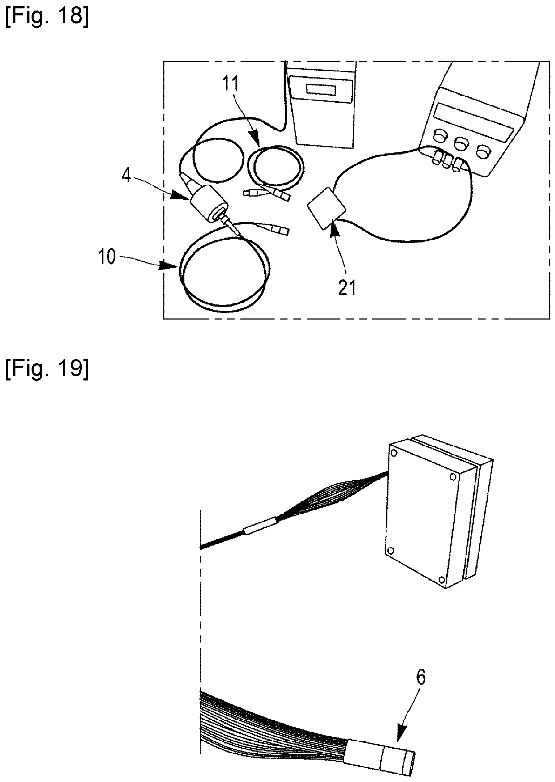

Suite à la réalisation de la carte de contrôle de diodes, un prototype de faisceaux de torons a été assemblé à partir de faisceau de fibres pour maximiser la puissance captée depuis chaque diode ainsi que la puissance émise à la surface du jonc (figure 19).

Avec les platines en contact, la diode testée se retrouve à entre 1 et 10 mm de l'entrée du faisceau et préférentiellement entre 2 et 8mm. La sortie du faisceau est ensuite approchée à environ 2 mm du jonc ainsi que d'une fibre multimode équipée d'un connecteur installé en usine sur une extrémité.

Lorsque la diode est alimentée à son courant maximum, la puissance en sortie du jonc de 200 m au travers d'une fibre multimode non clivée est entre 1 nW et 100mW et préférentiellement entre 5 et 10 nW, et la perte entre la sortie du faisceau et la sortie du jonc est équivalente en puissance.

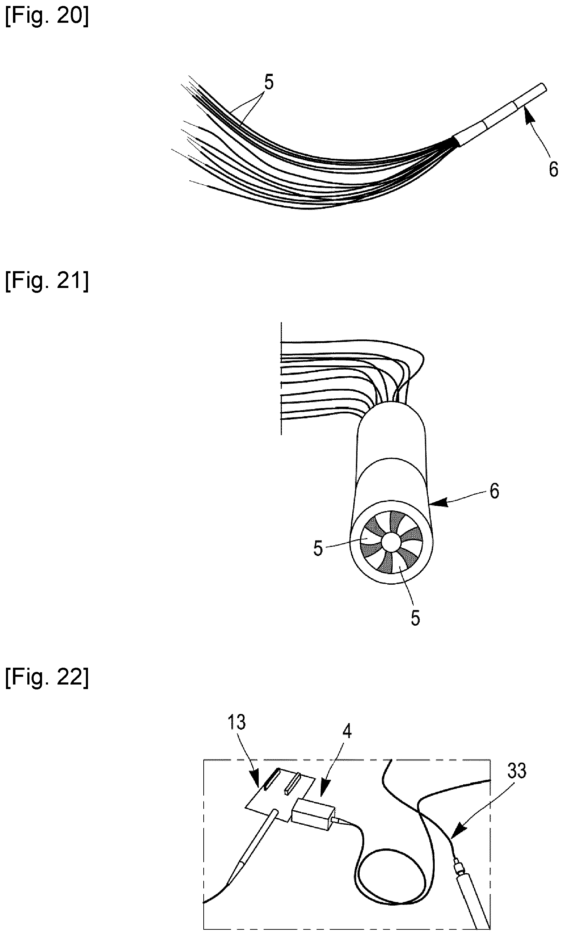

Un prototype de faisceau de torons de plusieurs centaines de fibres optiques multimodes de diamètre externe 100 µm est réalisé pour maximiser la puissance injectée dans le jonc (figure 20). Ce faisceau est divisé en 12 secteurs d'environ une centaine de fibres chacun (figure 21). Chaque secteur couvre une surface angulaire de 30°

Le dispositif de détection : première version

Une première version du dispositif de détection a été testée sur le second touret avec le dispositif d'émission de lumière de l'invention (figure 22).

Les fibres en sortie de jonc sont connectorisées avec un connecteur installé en usine sur une extrémité et sont reliées au dispositif de détection de lumière 4. Le dispositif de détection de lumière peut être relié à un circuit imprimé de détection 13.

Sur la première fibre monomode du touret, le détecteur prototype arrive en saturation pour le niveau minimum du détecteur de référence. Cela montre que le couple photodiode/amplificateur sélectionné sera a priori assez sensible pour travailler en dessous de 100mW.

Après optimisation de la position de la fibre devant le faisceau, la puissance mesurée en sortie de fibre supérieure à quelques nW.

Un essai a été réalisé en cassant la fibre de manière arbitraire avant injection. Dans ce cas aucune puissance n'a été détectée en sortie sans optimisation de l'injection (alignement de la fibre devant le faisceau), ce qui confirme l'importance de l'état de surface des fibres notamment coté injection (et donc de l'étape de polissage de l'extrémité du jonc).

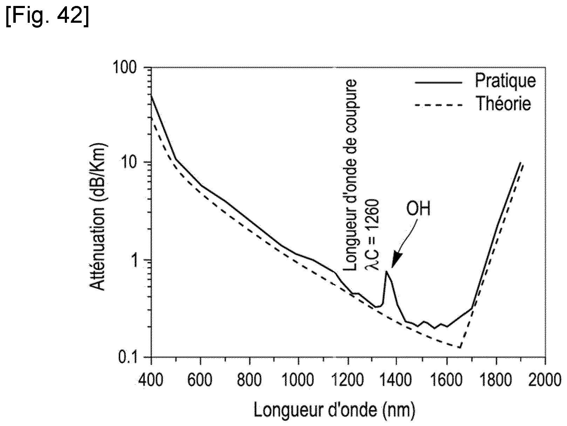

La longueur d'onde de la diode utilisée est de 650 nm, l'atténuation de la fibre à 650 nm est donnée à 4-5 dB / km (voir la figure 42 qui est le spectre d'absorption de fibres optiques commercialisées sous la dénomination SMF-28° par la société Corning). En vue de caractériser de grandes longueurs de câbles (> 1-2 km), l'injection d'une diode à 850 nm (atténuation de 2 dB/km) va être aussi réalisée.

Le dispositif de détection : deuxième version (premier jonc (30 cm))

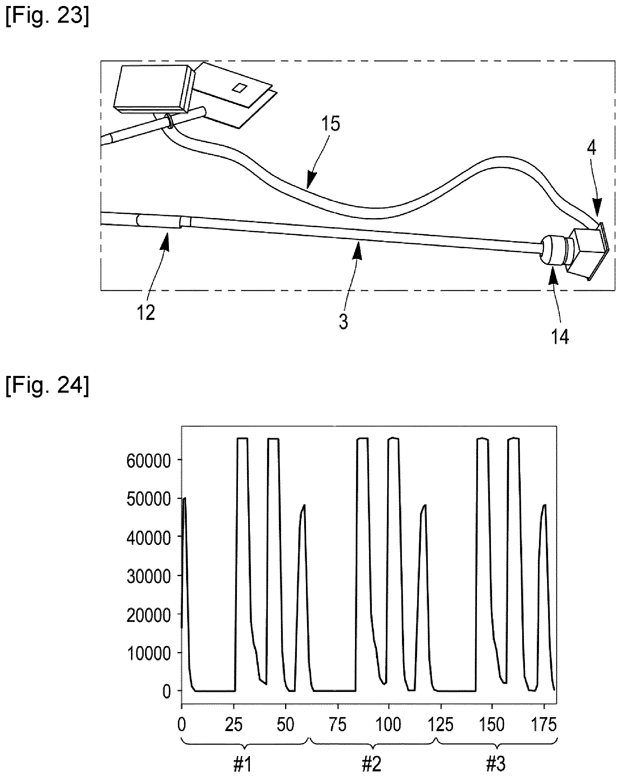

La deuxième version du détecteur a été conçue de manière à pouvoir être manipulée facilement devant le jonc, il comporte donc une partie mobile connectée à la carte mère avec une nappe flexible 15. Le jonc est un jonc de 30 cm de longueur (figure 23).

L'extrémité du faisceau et la première extrémité longitudinale du jonc sont logées à l'intérieur d'une gaine 12. Un presse-étoupe 14 de maintien du jonc 3 est disposé à la deuxième extrémité longitudinale du jonc 3.

Ainsi, du côté détecteur, la portion de jonc a été installée dans un presse-étoupe permettant de s'affranchir de la luminosité ambiante et ainsi maximiser la dynamique de détection.

Le faisceau a été construit en 12 secteurs adjacents.

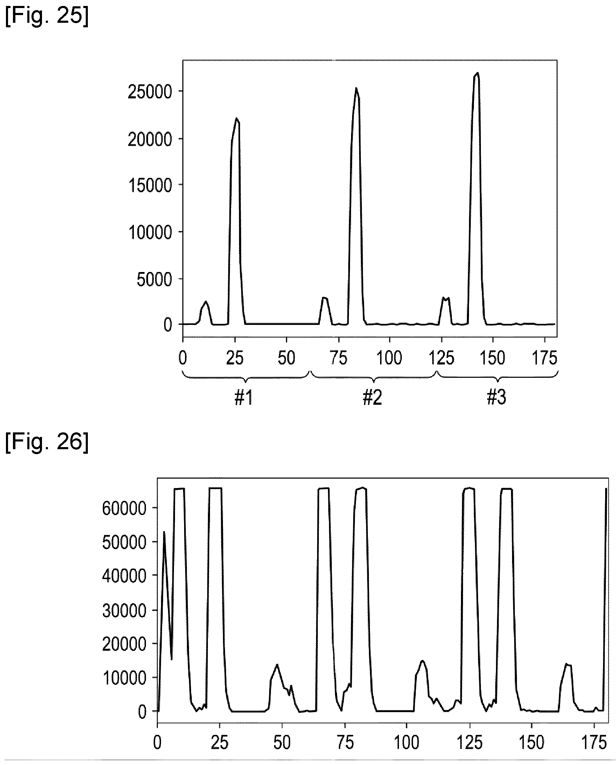

La visualisation des résultats se fait au travers d'un script mettant en forme les données issues du module d'échantillonnage (figure 24 (injection à puissance maximale) et figure 25 (injection à puissance minimale) : on observe en abscisse le nombre d'allumage séquentiel des secteurs).

Les conditions du test sont les suivantes : il y a 10 diodes, la durée d'allumage de chaque diode est de 500 ms, la fréquence/période d'échantillonnage est de 10 Hz/100 ms, le nombre de rotations est de 3, et la durée est de 18 s.

Le dispositif de détection : deuxième version (deuxième jonc (120 m))

Le couple faisceau-détecteur a été testé sur le deuxième jonc avec plusieurs niveaux de polissage.

Pour effectuer les tests, le jonc a été sectionné à environ 4 m de la partie sèche côté injection et 10 cm côté réception.

De la même façon que pour la portion de jonc, les diodes sont allumées en séquences avec notamment différents niveaux de polissage pour évaluer son influence.

Les conditions du test sont les suivantes : il y a 10 diodes, la durée d'allumage de chaque diode est de 500 ms

Il est à noter que l'alignement entre le faisceau et l'entrée du jonc n'est pas maintenu entre chaque test, le niveau absolu ne peut donc pas être précisément pris comme point de comparaison entre différents courbes. Néanmoins, la position angulaire est restée globalement là même pendant les tests.

La figure 26 illustre le cas d'un polissage d'entrée de 15 μm et d'un polissage de sortie grossier, avec une puissance de diode maximum. On observe deux fibres en saturation.

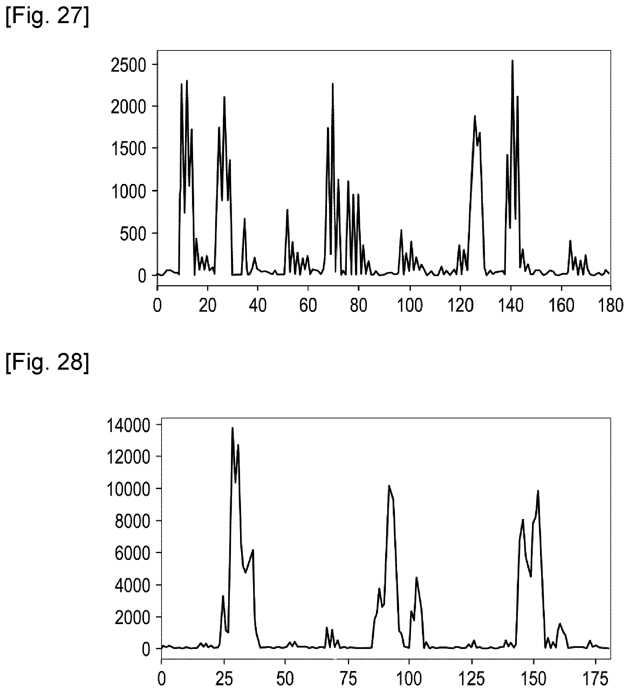

La figure 27 illustre le cas d'un polissage d'entrée de 15 μm et d'un polissage de sortie grossier, avec une puissance de diode minimum. On observe que la troisième fibre est difficilement visible, le rapport signal à bruit étant dégradé.

La figure 28 illustre le cas d'un polissage d'entrée de 15 μm et d'un polissage de sortie de 15 μm, avec une puissance de diode. On observe que le polissage de 15 μm a amélioré la réception. La troisième fibre est toujours difficile à distinguer.

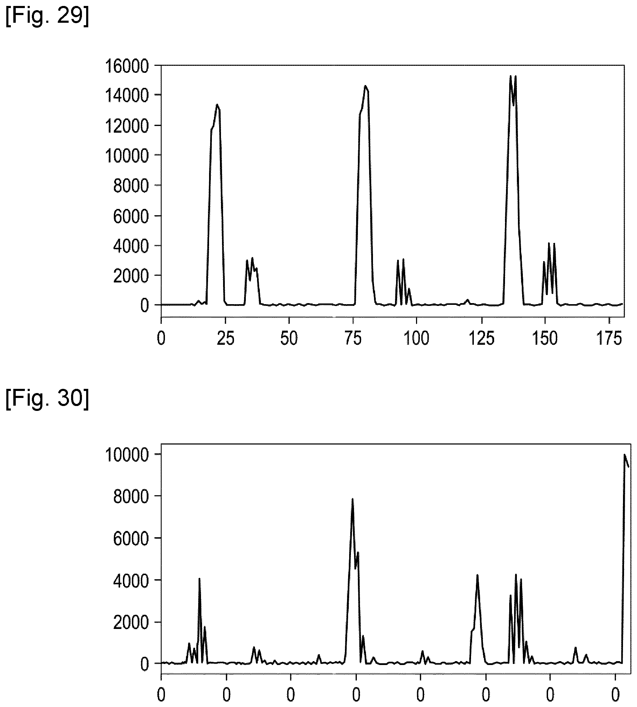

La figure 29 illustre le cas d'un polissage d'entrée de 6 μm et d'un polissage de sortie de 15 μm, avec une puissance de diode minimum. On observe que le polissage d'entrée de 6 μm a amélioré sensiblement

l'injection.

La figure 30 illustre le cas d'un polissage d'entrée de 3 μm et d'un polissage de sortie de 15 μm, avec une puissance de diode minimum. On observe que le polissage d'entrée de 3 μm a dégradé l'injection.

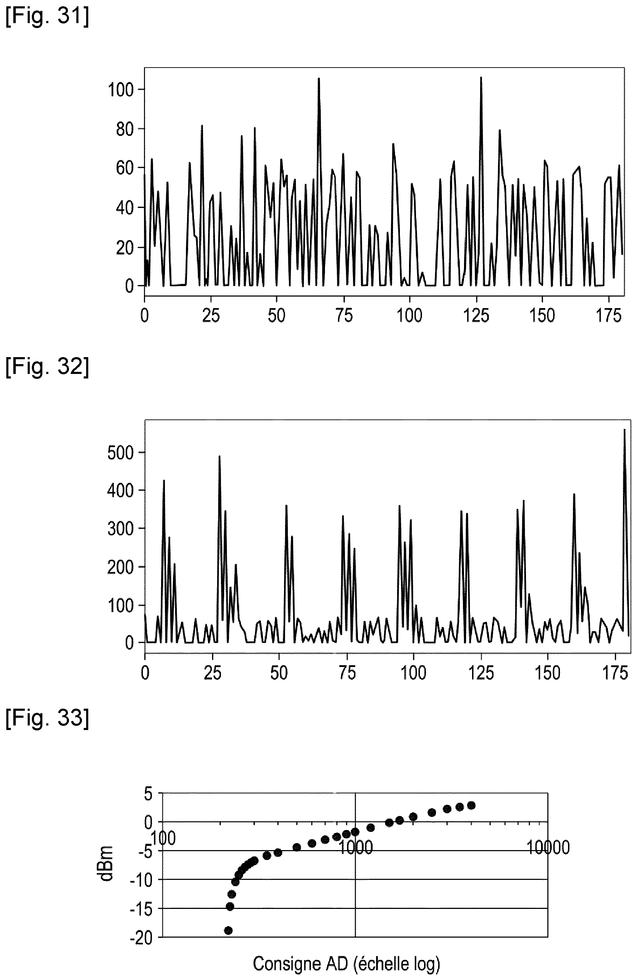

La figure 31 illustre le cas dans lequel les diodes sont éteintes et la lumière ambiante est éteinte. On observe un plancher de bruit minimum.

La figure 32 illustre le cas d'un polissage les diodes sont éteintes et la lumière ambiante est allumée. On observe que le jonc transmet de la lumière ambiante.

Les conclusions globales de cette phase de test sont :

- les trois fibres visibles à l'œil nu lors de l'éclairement au pointeur laser sont détectables avec le couple faisceau-détection.

Estimation de la dynamique du système injection-détection

Les résultats obtenus sur la portion du premier jonc permettent d'estimer la dynamique du système final et ainsi d'évaluer la longueur maximale de jonc atteignable.

Sur les figures 24 et 25, deux fibres successives (dont une monomode et une multimode) se retrouvent en saturation à forte puissance d'injection et détectables à faible puissance d'injection. La valeur de consigne AD correspond à la consigne en courant dans les diodes et la caractéristique courant-puissance de la diode est illustrée à la figure 33.

Ensuite, le niveau de détection peut baisser à nouveau jusqu'à atteindre un seuil bas $Th_{low}$ ayant une marge par rapport au plancher de bruit. Les résultats sur le jonc de 120 m ont montré que le bruit est induit par la luminosité ambiante, $Th_{low}$, peut donc être défini dans un premier temps à 100sur une base 100. Ceci donne le deuxième élément de la dynamique $dyn_2$, qui dépend du niveau de détection à puissance d'injection faible :

- pour la première fibre, avec un niveau de détection à puissance d'injection faible , le seuil de de détection bas significatif $Th_{low}$ base 100, et le deuxième élément de la dynamique $dyn_2$ vaut 250/100 = 2,5 soit environ 4 dB,
- pour la deuxième fibre, avec un niveau de détection à puissance d'injection faible (25000 AD), le seuil de de détection bas significatif $Th_{low}$ base 100D, et le deuxième élément de la dynamique $dyn_2$ vaut 2500/100 = 25 soit environ 14 dB.

La dynamique globale peut donc être estimée à $dyn = dyn_1 + dyn_2$ soit 25.7 dB pour la première fibre et 35.7 pour la deuxième fibre.

Etant donnée le polissage, il est vraisemblable que la différence de détection entre ces deux fibres soit directement liée au type de fibre éclairée (car les atténuations linéiques et de courbure peuvent être négligées sur une portion de jonc de 30 cm), ce qui impliquerait que la dynamique sur une fibre monomode serait autour de 25 dB

Avec une atténuation linéique d'environ 5 dB par km et en considérant que les contraintes sur les fibres n'induisent pas d'atténuation linéique supplémentaire significative, il serait possible d'atteindre environ 5 km en termes de longueur de jonc maximale.

Conditionnement du prototype émission-réception

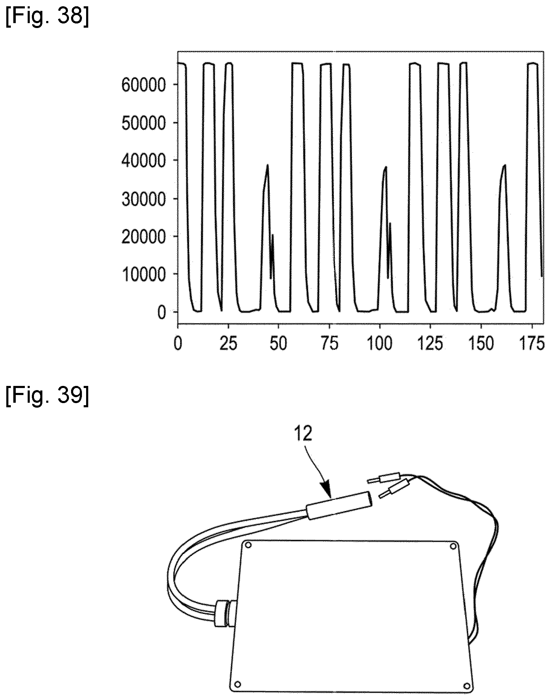

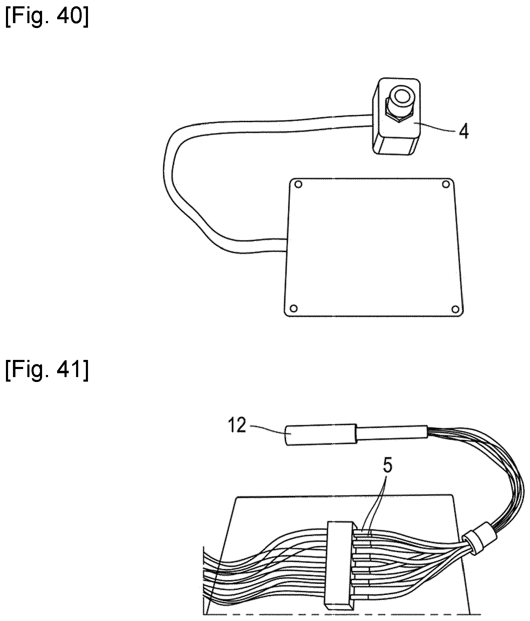

Les figures 39 à 41 illustrent un exemple de prototype de dispositif de détection selon l'invention.

Conclusions

Les tests ont permis de caractériser un jonc de 130 m comprenant deux fibres monomodes et deux fibres multimodes.

Le système de caractérisation développé permet d'injecter et de détecter le signal dans des fibres monomodes ou multimodes. La preuve de ce concept a été réalisée sur le dernier jonc fabriqué où quatre fibres optiques ont été détectées et caractérisées. La dynamique du système ainsi obtenue est comprise entre 10 dB et 50 dB et préférentiellement entre 25 dB et 35 dB. Cette dynamique autorise une caractérisation de jonc de longueur supérieure à 3 km.

On peut également envisager la réalisation d'un jonc de grande longueur (2-3 km) et équipé de quatre fibres monomodes.

**Revendications**

1. Dispositif (1) de détection d'un défaut dans un élément structurel (3) en matériau composite, **caractérisé en ce qu'**il comprend :

   - un élément structurel (3) en matériau composite, de forme allongée,
   - une pluralité de fibres optiques de détection (33, 34, 35, 36) disposées à l'intérieur de l'élément structurel (3), et s'étendant d'une première extrémité longitudinale (31) de l'élément structurel (3) à une deuxième extrémité longitudinale (32) de l'élément structurel (3), et
   - un dispositif d'émission de lumière (2) connecté fonctionnellement à la première extrémité longitudinale (31) de l'élément structurel (3), de manière à transmettre la lumière émise par le dispositif d'émission de lumière (2) à une première extrémité longitudinale des fibres optiques de détection (33, 34, 35, 36),

   **caractérisé en ce que** :

le dispositif d'émission de lumière (2) comprend une pluralité de sources lumineuses (21), chaque source lumineuse (21) étant connectée fonctionnellement à un toron (5) de fibres optiques, de manière à transmettre la lumière émise par la source lumineuse (21) aux fibres optiques du toron (5), l'ensemble des torons (5) étant regroupés en un faisceau de torons (6), l'extrémité des torons (5) du faisceau (6) étant connectée fonctionnellement avec la première extrémité longitudinale (31) de l'élément structurel (3),

dans lequel le dispositif d'émission de lumière (2) est en outre apte à actionner successivement les différentes sources lumineuses (21), de manière à transmettre successivement la lumière émise par les différentes sources lumineuses (21) aux différents torons (5) et aux différentes fibres optiques de détection (33, 34, 35, 36).

2. Dispositif (1) selon la revendication 1, **caractérisé en ce qu'**il comprend en outre un dispositif de détection de lumière (4), apte à détecter la lumière issue de chaque fibre optique de détection (33, 34, 35, 36) au niveau d'une deuxième extrémité longitudinale (32) de chaque fibre optique de détection (33, 34, 35, 36).

3. Dispositif (1) selon la revendication 2, **caractérisé en ce que** le dispositif de détection de lumière (4) est apte à tourner, de manière à détecter successivement la lumière issue des différentes fibres optiques de détection (33, 34, 35, 36).

4. Dispositif (1) selon l'une des revendications 1 à 3, **caractérisé en ce que** l'extrémité des torons (5) du faisceau (6) est disposée à l'intérieur d'une gaine (12) et est alignée avec la première extrémité longitudinale de l'élément structurel.

5. Dispositif (1) selon l'une des revendications 1 à 4, **caractérisé en ce que** le matériau composite comprend un cœur en fibres de carbone entouré par une couche de verre.

6. Dispositif (1) selon la revendication 1, **caractérisé en ce que** les fibres optiques de détection (33, 34, 35, 36) comprennent au moins une fibre optique monomode et/ou au moins une fibre optique multimode.

7. Dispositif (1) selon l'une des revendications 1 à 6, **caractérisé en ce que** la première extrémité longitudinale (31) et la deuxième extrémité longitudinale (32) de l'élément structurel (3) sont polies.

8. Dispositif (1) selon l'une des revendications 1 à 7, **caractérisé en ce que** la pluralité de sources lumineuses (21) comprend des diodes électroluminescentes.

9. Dispositif (1) selon la revendication 8, **caractérisé en ce que** les diodes électroluminescentes (21) ont une longueur d'onde d'émission comprise entre 1400 et 1600 nm ou entre 380 et 780 nm.

10. Dispositif (1) selon l'une des revendications 1 à 9, **caractérisé en ce que** le nombre de torons (5) est au moins égal au nombre de fibres optiques de détection (33, 34, 35, 36).

11. Dispositif (1) selon l'une des revendications 1 à 10, **caractérisé en ce que** le dispositif de détection de lumière (4) comprend une photodiode.

**Patentansprüche**

1. Vorrichtung (1) zum Erkennen eines Defekts in einem Strukturelement (3) aus Verbundwerkstoff, **dadurch gekennzeichnet, dass** sie umfasst:

   - ein Strukturelement (3) aus Verbundwerkstoff von länglicher Form,
   - eine Vielzahl von optischen Detektionsfasern (33, 34, 35, 36), die im Inneren des Strukturelements (3) angeordnet sind und sich von einem ersten Längsende (31) des Strukturelements (3) zu einem zweiten Längsende (32) des Strukturelements (3) erstrecken, und
   - eine Lichtemissionsvorrichtung (2), die funktionsfähig mit dem ersten Längsende (31) des Strukturelements (3) verbunden ist, sodass das von der Lichtemissionsvorrichtung (2) emittierte Licht an ein erstes Längsende der optischen Detektionsfasern (33, 34, 35, 36) übertragen wird,
   **dadurch gekennzeichnet, dass**:

   die Lichtemissionsvorrichtung (2) eine Vielzahl von Lichtquellen (21) umfasst, wobei jede Lichtquelle (21) funktionsfähig mit einem Strang (5) aus optischen Fasern verbunden ist, sodass das von der Lichtquelle (21) emittierte Licht auf die optischen Fasern des Strangs (5) übertragen wird, wobei die Gesamtheit der Stränge (5) zu einem Strangbündel (6) zusammengefasst ist, wobei das Ende der Stränge (5) des Bündels (6) funktionsfähig mit dem ersten Längsende (31) des Strukturelements (3) verbunden ist, wobei die Lichtemissionsvorrichtung (2) ferner in der Lage ist, die verschiedenen Lichtquellen (21) nacheinander zu betätigen, sodass das von den verschiedenen Lichtquellen (21) emittierte Licht nacheinander auf die verschiedenen Stränge (5) und die verschiedenen optischen Detektionsfasern (33, 34, 35, 36) übertragen wird.

2. Vorrichtung (1) nach Anspruch 1, **dadurch gekennzeichnet, dass** sie ferner eine Lichtdetektionsvorrichtung (4) umfasst, die in der Lage ist, das von jeder optischen Detektionsfaser (33, 34, 35, 36) ausgehende Licht im Bereich eines zweiten Längsendes (32) jeder optischen Detektionsfaser (33, 34, 35, 36) zu detektieren.

3. Vorrichtung (1) nach Anspruch 2, **dadurch gekennzeichnet, dass** die Lichtdetektionsvorrichtung (4) in der Lage ist, sich zu drehen, um nacheinander das von den verschiedenen optischen Detektionsfasern (33, 34, 35, 36) ausgehende Licht zu detektieren.

4. Vorrichtung (1) nach einem der Ansprüche 1 bis 3, **dadurch gekennzeichnet, dass** das Ende der Stränge (5) des Bündels (6) im Inneren einer Hülle (12) angeordnet und mit dem ersten Längsende des Strukturelements ausgerichtet ist.

5. Vorrichtung (1) nach einem der Ansprüche 1 bis 4, **dadurch gekennzeichnet, dass** der Verbundwerkstoff einen Kern aus Kohlenstofffasern umfasst, der von einer Glasschicht umgeben ist.

6. Vorrichtung (1) nach Anspruch 1, **dadurch gekennzeichnet, dass** die optischen Detektionsfasern (33, 34, 35, 36) mindestens eine optische Einmodenfaser und/oder mindestens eine optische Mehrmodenfaser umfassen.

7. Vorrichtung (1) nach einem der Ansprüche 1 bis 6, **dadurch gekennzeichnet, dass** das erste Längsende (31) und das zweite Längsende (32) des Strukturelements (3) poliert sind.

8. Vorrichtung (1) nach einem der Ansprüche 1 bis 7, **dadurch gekennzeichnet, dass** die Vielzahl von Lichtquellen (21) Leuchtdioden umfasst.

9. Vorrichtung (1) nach Anspruch 8, **dadurch gekennzeichnet, dass** die Leuchtdioden (21) eine Emissionswellenlänge zwischen 1400 und 1600 nm oder zwischen 380 und 780 nm aufweisen.

10. Vorrichtung (1) nach einem der Ansprüche 1 bis 9, **dadurch gekennzeichnet, dass** die Anzahl der Stränge (5) mindestens gleich der Anzahl der optischen Detektionsfasern (33, 34, 35, 36) ist.

11. Vorrichtung (1) nach einem der Ansprüche 1 bis 10, **dadurch gekennzeichnet, dass** die Lichtdetektionsvorrichtung (4) eine Fotodiode umfasst.

**Claims**

1. A device (1) for detecting a defect in a structural element (3) made of composite material, **characterized in that** it comprises:

   - a structural element (3) made of composite material and having an elongate shape,
   - a plurality of detection optical fibers (33, 34, 35, 36) arranged inside the structural element (3), and extending from a first longitudinal end (31) of the structural element (3) to a second longitudinal end (32) of the structural element (3), and
   - a light-emitting device (2) operatively connected to the first longitudinal end (31) of the structural element (3), so as to transmit the light emitted by the light-emitting device (2) to a first longitudinal end of the detection optical fibers (33, 34, 35, 36),
   **characterized in that:**

   the light-emitting device (2) comprises a plurality of light sources (21), each light source (21) being operatively connected to a strand (5) of optical fibers, so as to transmit the light emitted by the light source (21) to the optical fibers of the strand (5), all the strands (5) being grouped together in a bundle (6) of strands, the end of the strands (5) of the bundle (6) being operatively connected to the first longitudinal end (31) of the structural element (3),
   wherein the light-emitting device (2) is further able to successively actuate the different light sources (21), so as to successively transmit the light emitted by the different light sources (21) to the different strands (5) and detection optical fibers (33, 34, 35, 36).

2. The device (1) according to claim 1, **characterized in that** it further comprises a light detection device (4), able to detect the light from each detection optical fiber (33, 34, 35, 36) at a second longitudinal end (32) of each detection optical fiber (33, 34, 35, 36).

3. The device (1) according to claim 2, **characterized in that** the light detection device (4) is rotatable, so as to successively detect the light from the various detection optical fibers (33, 34, 35, 36).

4. The device (1) according to any of claims 1 to 3, **characterized in that** the end of the strands (5) of the bundle (6) is arranged inside a sheath (12) and is aligned with the first longitudinal end of the structural element.

5. The device (1) according to any of claims 1 to 4, **characterized in that** the composite material comprises a carbon fiber core surrounded by a glass layer.

6. The device (1) according to claim 1, **characterized in that** the detection optical fibers (33, 34, 35, 36) comprise at least one single-mode optical fiber and/or at least one multimode optical fiber.

7. The device (1) according to any of claims 1 to 6, **characterized in that** the first longitudinal end (31) and the second longitudinal end (32) of the structural element (3) are polished.

8. The device (1) according to any of claims 1 to 7, **characterized in that** the plurality of light sources (21) comprises light-emitting diodes.

9. The device (1) according to claim 8, **characterized in that** the light-emitting diodes (21) have an emission wavelength between 1400 and 1600 nm or between 380 and 780 nm.

10. The device (1) according to any of claims 1 to 9, **characterized in that** the number of strands (5) is at least equal to the number of detection optical fibers (33, 34, 35, 36).

11. The device (1) according to any of claims 1 to 10, **characterized in that** the light detection device (4) comprises a photodiode.

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

$\tau_{i (dB)} = f(d)$

[Fig. 11]

[Fig. 12]

[Fig. 13]

[Fig. 14]

[Fig. 15]

[Fig. 16]

[Fig. 17]

[Fig. 18]

[Fig. 19]

[Fig. 20]

[Fig. 21]

[Fig. 22]

[Fig. 23]

[Fig. 24]

[Fig. 25]

[Fig. 26]

[Fig. 27]

[Fig. 28]

[Fig. 29]

[Fig. 30]

[Fig. 31]

[Fig. 32]

[Fig. 33]

Consigne AD (échelle log)

[Fig. 34]

[Fig. 35]

[Fig. 36]

[Fig. 37]

[Fig. 38]

[Fig. 39]

[Fig. 40]

[Fig. 41]

[Fig. 42]

**RÉFÉRENCES CITÉES DANS LA DESCRIPTION**

**Documents brevets cités dans la description**

- WO 2019168998 A1
- US 6486465 B1
- US 4936649 A
- EP 2693187 A2